# EUROPEAN PATENT SPECIFICATION

(11) **EP 2 538 662 B1**
(45) Date of publication and mention of the grant of the patent: **01.06.2016**
(21) Application number: 12172298.7
(22) Date of filing: 15.06.2012
(51) Int. Cl.: H04N 5/235

(54) **Apparatus, and associated method, for facilitating automatic-exposure at camera device**
Vorrichtung uns zugehöriges Verfahren zur Durchführung von automatischer Belichtung bei einer Kameravorrichtung
Appareil et procédé associé pour faciliter l'exposition automatique à un dispositif de caméra

(30) Priority: 24.06.2011 US 201161501099 P
(43) Date of publication of application: 26.12.2012
(73) Proprietor: BlackBerry Limited, Waterloo, ON N2K 0A7 (CA)
(72) Inventor: Jaffrain, Gael, Waterloo, Ontario N2L 3W8 (CA); Xue, Gang, Waterloo, Ontario N2L 3W8 (CA); Zhou, Hong Yu, Waterloo, Ontario N2L 3W8 (CA)
(74) Representative: Fennell, Gareth Charles

(56) References cited:
- US-A- 5 950 018
- US-A1- 2006 132 424
- US-A1- 2008 303 922
- US-A1- 2009 303 346
- US-A1- 2010 141 571

## Description

The present disclosure relates generally to a manner by which to facilitate exposure setting at a device having camera functionality. More particularly, the present disclosure relates to an apparatus, and an associated method, by which to set an initial exposure at the device from which an automatic exposure procedure converges to a final exposure.

The initial exposure is set responsive to ambient lighting conditions sensed by an ambient light sensor. When implemented at a device having a backlighted display, the same ambient lighting sensor that is used to control the level of back lighting is used to select the initial exposure.

### Background

Recent years have been witness to many changes, permitted as a result of advancements in technology. Many new services, and devices containing new functionalities, are available and used by many, made possible due to such advancements in technology.

Advancements in digital processing technologies and digital communication technologies are exemplary of the advancements in technology that have permitted such new functionality and services. Multi-user, radio communication systems, such as cellular communication systems and WiFi communication systems utilize digital communication and processing techniques permitted as a result of such advancements in technology. Cellular communication networks and WiFi networks, as well as networks of other radio communications have been installed over significant portions of the populated areas of the world, providing telephonic and data communication services at affordable prices.

A user typically utilizes a wireless device to send and to receive information in a cellular, WLAN, or other radio communication system. A wireless device includes transceiver circuitry to send and to receive information with a network part of the communication system. A wireless device sometimes includes additional functionality in addition to the communication functionality provide by the transceiver circuitry. A wireless device that includes the additional functionality forms a multi-functional device.

A wireless device sometimes, for instance, includes camera functionality. The camera functionality, implemented, for example, through use of a camera module, provides for the recordation of an image, or a sequence of images that forms a video sequence. Once recorded, data, which forms the image, is subsequently displayable at an image display element of the wireless device. Or, the data is provided for storage or display elsewhere. A wireless device is capable, for instance, of transmitting the data representative of a recorded image by way of a cellular, or other, communication system to a remote location for storage or display thereat.

The camera module of a wireless device is often times size-constrained. The physical dimensions of the wireless device typically are required to be minimized, and, therefore, the physical dimension permitted of a camera module forming a part of the wireless device is correspondingly limited. In spite of the size constraints imposed on a camera module, efforts are made to provide camera functionality that permits convenience of operation as well as to permit the formation of good-quality images.

Camera modules are sometimes provided with automatic exposure functionality that provides for automatic calculation and automatic adjustment in exposure settings to cause the camera module to exhibit appropriate exposure settings automatically so that when an image is recorded, the exposure setting is appropriate or optimized for ambient conditions when the image is recorded. Due to the size constraints imposed upon camera modules, use of conventional elements of SLR and DSLR cameras, such as an on-board TTL (through-the-lens) exposure meter, cannot be utilized.

The exposure is determinative of lighting characteristics of images recorded by the camera functionality. The exposure is controlled, in a digital camera, for instance, by controlling the integration time and gain of a light sensor assembly. Existing automatic exposure schemes, however, suffer from various disadvantages. An improvement to the existing art would therefore be advantageous.

US Publication 2008/303922 A1 (Chauduri Imran et.al.) discloses a method and apparatus for image capture including a camera integrated into a portable device. US Patent Publication 5,950,018 A (Keller James Mcneel) discloses a panoramic camera. US Publication 2010/141571 A1 (Chiang Tony et. al.) discloses an image sensor with an integrated light meter for controlling display brightness. US Publication 2009/0303346 A1 discloses a camera with a backlight device. A backlight amount and an exposure time can be adjusted based on an integrated value of imaging data captured by the image sensor.

It is in light of this background information related to devices having camera functionality that the significant improvements of the present disclosure have evolved.

### Brief Description of the Drawings

Figure 1 illustrates a functional block diagram of a communication system that includes a device having the camera functionality of an implementation of the present disclosure.
Figure 2 illustrates a process diagram representative of the process of operation of an implementation of the present disclosure.
Figure 3 illustrates a method flow diagram representative of the method of operation of an implementation of the present disclosure.

### Detailed Description

The present disclosure, accordingly, advantageously provides an apparatus, and an associated method, by which to facilitate exposure setting at a device having camera functionality.

Through operation of an implementation of the present disclosure, a manner is provided by which to set an initial exposure at the device from which an automatic exposure procedure converges to a final exposure.

In one aspect of the present disclosure, the initial exposure is set responsive to ambient lighting conditions sensed by an ambient light sensor. When implemented at a device having a backlighted display, the same ambient lighting sensor that is used to control the level of backlighting is used to select the initial exposure setting.

In another aspect of the present disclosure, an ambient light sensor is positioned at a device having both camera functionality and a backlighted display or other element. The ambient light sensor is positioned at the device at a location that is permitting of sensing by the sensor of ambient lighting conditions in proximity to the device. The ambient light sensor light sensor is positioned, for instance, at a housing surface of the device, e.g., mounted at the device housing.

In another aspect of the present disclosure, the ambient light sensor forms a photo diode that senses light energy and generates an electrical signal that is proportional to, or is a function of, the sensed light energy. The electrical signal is, e.g., further converted into digital form by an analog-to-digital converter (ADC).

In another aspect of the present disclosure, the electrical signal formed by the ambient light sensor or a digital representation thereof, is provided to a backlight control circuit of a backlighted display, such as a keyboard or screen. The electrical signal, which is of a value responsive to the sensed, ambient light level, is used to control the intensity level of the backlighting of the backlighted display. The level of the backlighting is variable to accommodate any of various lighting conditions sensed by the ambient light sensor. Typically, the backlighting is increased when ambient lighting conditions improve, that is to say, in well-light conditions. Conversely, in low-light, ambient conditions, the backlighting is of a reduced intensity, and the display or keyboard is of a decreased brightness.

In another aspect of the present disclosure, the electrical signal formed by the ambient light sensor is provided to a camera module of the device. The camera module forms part of a multi-functional device, or the camera module forms part of a standalone device. The electrical signal, an indication of the ambient light conditions, is used by the camera functionality to set an initial exposure of the camera functionality. The exposure is determinative of characteristics of images recorded by the camera functionality.

In another aspect of the present disclosure, the camera functionality includes automatic exposure capability. The automatic exposure capability provides for automatic selection of an appropriate exposure setting to be exhibited by the camera functionality. The indication of the ambient lighting conditions sensed by the ambient light sensor is utilized to select an initial exposure setting to be exhibited by the camera functionality. The initial exposure setting defines the exposure setting that is determinative of characteristics of images recorded by the camera functionality at the commencement of the automatic exposure procedure. The initial exposure setting, for instance, permits greater amounts of incident light energy to be sensed, such as through use of a lengthy integration time or high gain of a sensor assembly, in low-light conditions, as indicated by the value of the electrical signal formed by the ambient light sensor.

In another aspect of the present disclosure, the automatic exposure process converges to a final exposure through use of a progressive adjustment of the exposure until the exposure is aligned with an image target.

In another aspect of the present disclosure, the initial exposure setting is determinative of the integration time of integration of sensed light energy at a camera-module sensor array. Or, the initial exposure setting is determinative of the gain of the sensor assembly. Or, the initial exposure setting is determinative of the shutter speed of the camera functionality. Or, the initial exposure setting is determinative of the initial aperture of the camera lens of the camera functionality.

In another aspect of the present disclosure, the automatic exposure scheme comprises a fully automatic exposure scheme. In another implementation of the present disclosure, the automatic exposure scheme comprises an aperture-priority scheme. And, in another implementation of the present disclosure, the automatic exposure scheme comprises a shutter-priority scheme. In one implementation, the automatic-exposure scheme used at the camera functionality is selectable.

By selecting an initial exposure setting responsive to a detected level of ambient light, using a sensor that is also used in the control of the level of backlighting of a backlighted element, quicker conversion to a final exposure setting is obtained without requiring additional structure to obtain an initial ambient lighting indication.

In these and other aspects, therefore, an apparatus, and an associated method, is provided for facilitating operation of a device having camera functionality. An ambient light sensor is configured to sense ambient light energy and to provide an indication of a level of the ambient light energy. An exposure selector is adapted to receive the indication of the level of the ambient light energy sensed by the ambient light sensor. The exposure selector is configured to select an initial camera exposure using the indication of the level of the light energy.

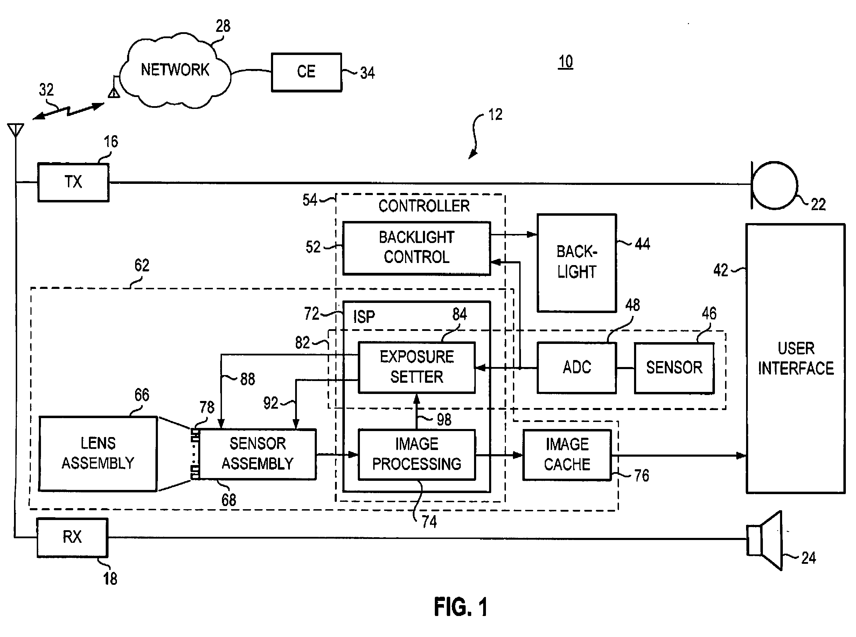

Turning first, therefore, to Figure 1, a communication system 10 provides for communications with communication devices, such as the wireless device 12. In the exemplary implementation shown in Figure 1, the communication system 10 comprises a radio communication system, such as a cellular communication system, a WiFi communication system, or other radio communication system operable pursuant to operating protocols of another radio communication system standard. While the following description shall describe an exemplary implementation in which the device 12 forms a wireless device, in other implementations, the device 12 is configured in another manner and, for instance, forms a standalone device.

The device 12, here implemented as a wireless device, includes transceiver circuitry, represented in Figure 1 by a transmit part 16 and a receive part 18. A microphone 22 is coupled to the transmit part 16, and a speaker 24 is coupled to the receive part 18. The transceiver circuitry transduces signals with analogous circuitry of a network part 28 of a network portion of the communication system. During operation of the communication system, information is communicated between the network part 28 and the device 12 by way of panels 32 that interconnect the device 12 and the network part 28 in communication connectivity. The channels 32 here form radio channels of a radio air interface defined in an appropriate operating specification pursuant to which the communication system 10 operates.

A communication endpoint (CE) is also shown in the figure, placed in communication connectivity with the network part 28. The communication endpoint is representative of a source of formation that is communicated to the device 12 and the ultimate destination of information originated at the device 12.

The wireless device 12 here includes a user interface 42 including, e.g., a display screen. The display screen 42 comprises, for instance, a touch screen display in which the display includes both an output element and an input element. The user interface 42 is also representative of a keypad, keyboard, or other input elements.

Howsoever configured, the user interface comprises a backlighted element, that is, an element that is illuminated by a backlight. Use of backlighting improves the viewability of user interface element. For instance, a backlighted, user display screen is back lighted at an increased intensity when ambient light conditions become brighter. And, the backlighting is reduced in intensity when the brightness of ambient light conditions lessen.

An ambient light sensor 46 is positioned to sense ambient light conditions. The light sensor 46 is positioned, e.g., beneath a protective cover glass that also covers the user interface element, or the sensor forms part of the user interface element. The ambient light sensor generates an electrical signal that is of a signal value related to, such as proportional to, the light energy sensed by the sensor. The electrical signal is provided to an analog-to-digital converter "ADC" 48 that converts the electrical signal into digital form.

The digitized signal is provided to a backlight control element of a controller 54. The backlight control element functions to control the intensity of backlighting of the user interface 42. That is to say, the intensity of the backlighting of a backlight 56 is controlled by the control element 52 responsive to the sensed indications of the sensor 46.

The wireless device 12 is a multi-functional device, here also including camera functionality provided by a camera module 62. The camera module 62, along with other elements of the device 12, is functionally represented, implementable in any desired manner including, for instance, hardware elements, firmware elements, program code executable by processing circuitry, and combinations thereof.

In the illustrated implementation, the camera module 62 includes a lens assembly 66, a sensor assembly 68, an image signal processor/interface subsystem (ISP) 72 and an image cache 76. The exemplary implementation shown in Figure 1 illustrates the camera module to be a discrete module. In alternate implementations, the functionality of the camera module are embodied at other portions of the wireless device.

The lens assembly 66 includes one or more camera lenses that together operate to focus incident light of an image, i.e., the camera target, and to direct the light upon sensors 78 of a sensor assembly 68.

The sensors 78 are arranged in groups of red, green, and blue (RGB) pixels. The differently colored pixels generate electrical representations of sensed light energy. The sensor assembly 68 generates an electrical representation of the sensed light energy. Indications are provided to the ISP 72. Image processing functionality 74 of the ISP operates upon the indication provided thereto and forms a resultant image. The resultant image is stored at the image cache 76, available, e.g., for display at a display screen of the user interface 42 or for transmission to a remote location by the transceiver circuitry of the device 12 for delivery, e.g., to the communication endpoint 36.

Portions of the camera module further comprise an apparatus 82 of an implementation of the present disclosure. The apparatus 82 provides for automatic exposure operation to select and to cause the exposure setting of the camera module to cause an appropriate amount of light energy to pass through the lens assembly 66 and the incident upon the sensor assembly 68. The exposure is controlled through selection of any of various camera parameters, such as the gain or integration time of the sensor assembly 68.

The apparatus 82 utilizes the indication of ambient lighting conditions obtained by the ambient light sensor 46 to select an initial exposure setting. By making the selection of the initial exposure setting based upon an actual, measured, ambient-light condition, automatic exposure operation using convergence to a final exposure is carried out more quickly. The time required to converge the exposure to the final, exposure setting is reduced, thereby to reduce the delay in the amount of time that a user of the device 12 must wait until the final exposure setting is obtained. An improved user experience is provided as the number of frames, which are too dark or too bright, that a user might record prior to obtaining the final exposure setting, are limited or avoided entirely.

In exemplary operation, the ambient light sensor 46 of the apparatus 82 senses incident light thereon. A digitized indication, formed by the ADC 48, is provided to the exposure setter 84. The exposure setter determines, based upon the sensed, ambient-light indication an initial exposure setting. In the exemplary implementation, the exposure is set by control of integration time and gain of the sensor assembly 68. The line 88 is here representative of a control signal provided by the exposure setter to control the integration time of sensed light energy sensed by the pixels 78 of the sensor assembly. And, the line 92 is representative of a control signal provided by the exposure setter 84 to control the gain of the sensor assembly 68. In various implementations, the initial exposure is set by control of one or both of these, or other, parameters. Other camera parameters can also be used to control the exposure. For instance, if the camera lens of the lens assembly is configured to include a selectable shutter speed for a variable aperture size, the exposure setter in one implementation controls one or both of these additional, or alternate, parameters to define the initial exposure of the camera module.

Upon setting of the initial exposure of the camera module, the camera module is caused to sense an image through appropriate operation of the lens assembly. That is to say, incident light of a target is focused by the lens assembly, sensed by the sensor assembly, and the image is processed by the image processing functionality 74 of the ISP 72 to obtain indications of characteristics of the resultant, sensed image. Feedback is provided, here indicated by way of the line 98 to the exposure setter 84.

The exposure setter utilizes the provided information to select updated exposure settings. In the exemplary implementation in which the exposure is set by the integration time and the gain of the sensor assembly 68, updated parameters are provided to the sensor assembly. Another sensed image is obtained, which is processed by the image processing functionality 74, and another indication is provided to the exposure setter 84 by way of the line 98. Repeated iterations, as needed, are performed to cause the exposure to converge to a final exposure setting. Convergence to the final exposure setting through use of an implementation of the present disclosure by which to set the initial exposure based upon the sensed, ambient-light conditions permits a reduction in the time required to obtain the final exposure setting.

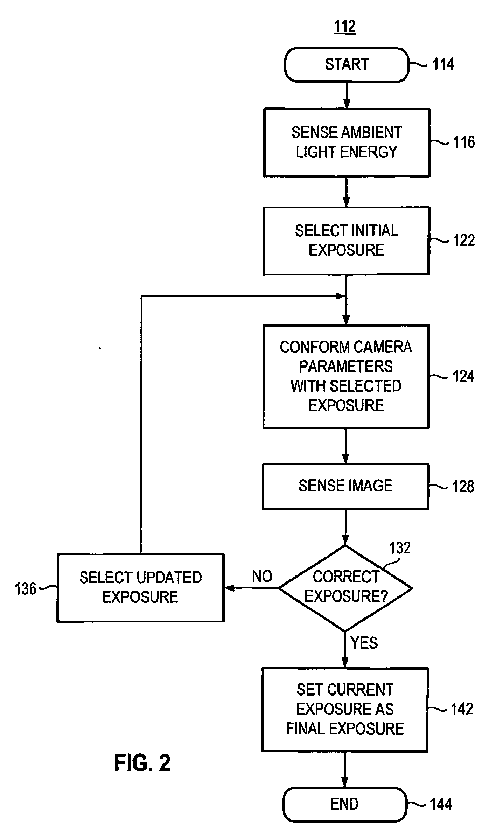

Figure 2 illustrates a process 112 of an implementation of the present disclosure by which to select an exposure setting for a camera module of a device having a backlighted display element.

Subsequent to commencement of the process indicated by the start block 114, ambient light energy is sensed, indicated by the block 116. The ambient light energy is sensed by an ambient light sensor, such as a photo diode, that also is utilized in the control of back lighting intensity of a backlight of a backlighted display or other element of the device.

An indication of the sensed, ambient light is used to select an initial exposure, indicated by the block 122, to be exhibited by the camera module during operation. And, as indicated by the block 124, camera parameters are conformed to cause the camera to operate at the selected exposure.

Then, and as indicated by the block 128, the camera modules operate to sense an image. Image processing is performed, and a determination is made, indicated by the decision block 132, as to whether the sensed image exhibits proper exposure-related characteristics. If not, the no branch is taken to the block 136, and an updated exposure is selected. And, a path is taken to the block 124 whereat camera parameters are caused to conform to the updated, selected exposure. The process repeats. Each time in which a determination is made that the sensed image does not yet exhibit proper exposure-related characteristics, updated exposure settings are selected at the block 136, and the conformed camera parameters are utilized to sense another image. Thereby, through convergence, the correct exposure setting is obtained. When a determination is made at the decision block 132 that the image exhibits proper exposure-related characteristics, the yes branch is taken from the decision block to the block 142. The current exposure is set as the final exposure setting and used for subsequent camera operation of the camera module. And, a path is taken to the end block 144.

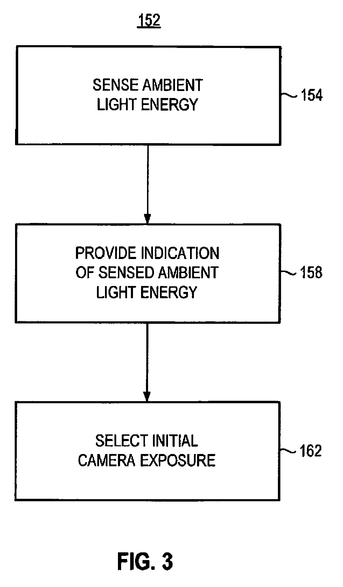

Figure 3 illustrates a method flow diagram 152 representative of the method of operation of an implementation of the present disclosure. The method facilitates operation of a device that has camera functionality. First, and as indicated by the block 154, ambient light energy is sensed. Then, and as indicated by the block 158, an indication of a level of the sensed ambient light energy is provided. And, as indicated by the block 162, an initial camera exposure is selected. Selection is made using the indication of the level of the ambient light energy.

Thereby, a manner is provided by which to provide for selection of exposure settings to be exhibited by a camera module of a wireless device or other device having a backlighted element. Convergence to a final exposure setting is facilitated by using an indication of the intensity of the ambient light to determine an initial exposure setting. Through such selection, rather than relying upon an arbitrary initial exposure setting, the initial exposure setting is based upon actual, ambient conditions. Additionally, because the sensed, ambient-light indication is provided by a light sensor that is also used in the control of backlighting of a display or other element of the device, part count, and associated cost, of the device is better minimized.

Presently preferred implementations of the disclosure and many of improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. An apparatus (12) for facilitating operation of a wireless device having camera functionality, said apparatus comprising:
a sensor assembly (68);
a user interface (42) comprising a cover glass and a screen;
a backlight-control-circuit ambient light sensor (46) configured to sense ambient light energy and to provide an indication of a level of the ambient light energy;
a screen backlight (44) configured to backlight the screen of the user interface (42), said screen backlight (44) adapted to receive the indication of the level of the ambient light energy provided by said backlight-control-circuit ambient light sensor (46), said screen backlight (44) further configured to select an intensity level of the screen backlight (44) using the indication of the level of the ambient light energy; and
an exposure selector (84) adapted to receive the indication of the level of the ambient light energy sensed by said backlight-control-circuit ambient light sensor (46), said exposure selector (84) configured to select an initial camera exposure setting for the sensor assembly (68) using the indication of the level of the ambient light energy, wherein the indication of the level of the ambient light energy sensed by said backlight-control-circuit ambient light sensor (46) is used both to select the intensity level of said screen backlight and the initial exposure setting.

2. The apparatus of claim 1 wherein said ambient light sensor (46) comprises a photodiode circuit.

3. The apparatus of any of claims 1-2 wherein said exposure selector (84) is configured to automatically to select a final exposure that defines an exposure level of an image to be recorded by the camera functionality.

4. The apparatus of claim 3 wherein said exposure selector (84) is configured to select the final exposure level pursuant to a progressive adjustment.

5. The apparatus of any of claims 1-4 wherein selection of the initial camera exposure by said exposure selector (84) is determinative of a sensor-assembly initial integration time.

6. The apparatus of any of claims 1-5 wherein selection of the initial camera exposure by said camera exposure selector (84) is determinative of a sensor-assembly gain.

7. The apparatus of any of claims 1-6 wherein said exposure selector (84) is configured to select a shutter speed.

8. The apparatus of any of claims 1-7 wherein said exposure selector (84) is configured to select an aperture setting.

9. A method for facilitating operation of a wireless device (12) having camera functionality, said method comprising:
sensing ambient light energy (116) using a backlight-control-circuit ambient light sensor forming part of a user interface for a wireless device;
providing an indication of a level of the ambient light energy(158);
backlighting a screen of the user interface at an intensity level_using the indication of a level of the ambient light energy; and
selecting an initial camera exposure setting, for a sensor assembly (68) in the wireless device, using the indication of the level of the ambient light energy (122), wherein the indication of the level of the ambient light energy sensed during said sensing is used both in selection of the intensity level of the backlighting of the screen and of the initial camera exposure setting.

10. The method of claim 9 wherein said selecting (122) comprises automatically selecting a final exposure (142) that defines an exposure level of an image to be recorded by the camera functionality.

11. The method of any of claims 9-10 wherein said selecting further comprises selecting a final exposure level pursuant to a progressive adjustment (124, 128, 132, 136).

12. The method of any of claims 9-11 wherein selection of the initial camera exposure (122) during said selecting is determinative of an initial sensor-assembly integration time.

## Patentansprüche

1. Eine Vorrichtung (12) zum Erleichtern eines Betriebs einer drahtlosen Vorrichtung mit einer Kamerafunktionalität, wobei die Vorrichtung umfasst:
eine Sensoranordnung (68);
eine Benutzerschnittstelle (42), die ein Abdeckglas und einen Bildschirm umfasst;
einen Hintergrundbeleuchtungssteuerschaltungumgebungslichtsensor (46), der konfiguriert ist, um Umgebungslichtenergie wahrzunehmen und eine Angabe eines Pegels der Umgebungslichtenergie bereitzustellen;
eine Bildschirmhintergrundbeleuchtung (44), die konfiguriert ist, um dem Bildschirm der Benutzerschnittstelle (42) hintergrundzubeleuchten, wobei die Bildschirmhintergrundbeleuchtung (44) angepasst ist, um die Angabe des Pegels der Umgebungslichtenergie zu erhalten, die durch den Hintergrundbeleuchtungssteuerschaltungumgebungslichtsensor (46) bereitgestellt wird, wobei die Bildschirmhintergrundbeleuchtung (44) ferner konfiguriert ist, um einen Intensitätslevel der Bildschirmhintergrundbeleuchtung (44) auszuwählen unter Benutzung der Angabe des Pegels der Umgebungslichtenergie; und
einen Belichtungssauswähler (84), der angepasst ist, um die Angabe des Pegels der Umgebungslichtenergie zu erhalten, die durch den Hintergrundbeleuchtungssteuerschaltungumgebungslichtsensor (46) bereitgestellt wird, wobei der Belichtungssauswähler (84) konfiguriert ist, um eine initiale Kamerabelichtungseinstellung für die Sensoranordnung (68) auszuwählen unter Benutzung der Angabe des Pegels der Umgebungslichtenergie, wobei die Angabe des Pegels der Umgebungslichtenergie, die wahrgenommen wird durch den Hintergrundbeleuchtungssteuerschaltungumgebungslichtsensor (46), benutzt wird, um beide den Intensitätspegel der Bildschirmhintergrundbeleuchtung und die initiale Belichtungseinstellung auszuwählen.

2. Die Vorrichtung nach Anspruch 1, wobei der Umgebungslichtsensor (46) eine Fotodiodenschaltung umfasst.

3. Die Vorrichtung nach einem der Ansprüche 1-2, wobei der Belichtungssauswähler (84) konfiguriert ist, um automatisch eine finale Belichtung einzustellen, die einem Belichtungspegel eines aufzunehmenden Bildes durch die Kamerafunktionalität definiert.

4. Die Vorrichtung nach Anspruch 3, wobei der Belichtungssauswähler (84) konfiguriert ist, um den finalen Belichtungspegel nachfolgend auf eine fortschreitende Anpassung auszuwählen.

5. Die Vorrichtung nach einem der Ansprüche 1-4, wobei die Auswahl der initialen Kamerabelichtung durch den Belichtungssauswähler (84) bestimmend ist für eine initiale Sensoranordnungsintegrationszeit.

6. Die Vorrichtung nach einem der Ansprüche 1-5, wobei die Auswahl der initialen Kamerabelichtung durch den Kamerabelichtungssauswähler (84) bestimmend ist für eine Sensoranordnungszunahme.

7. Die Vorrichtung nach einem der Ansprüche 1-6, wobei der Belichtungssauswähler (84) konfiguriert ist, um eine Verschlussgeschwindigkeit auszuwählen.

8. Die Vorrichtung nach einem der Ansprüche 1-7, wobei der Belichtungssauswähler (84) konfiguriert ist, um eine Öffnungseinstellung auszuwählen.

9. Ein Verfahren zum Erleichtern eines Betriebs einer drahtlosen Vorrichtung (12) mit einer Kamerafunktionalität, wobei das Verfahren umfasst:
Wahrnehmen von Umgebungslichtenergie (116) unter Benutzung eines Hintergrundbeleuchtungssteuerschaltungumgebungslichtsensors, der einen Teil einer Benutzerschnittstelle für eine drahtlose Vorrichtung formt;
Bereitstellen einer Angabe eines Pegels einer Umgebungslichtenergie (158);
Hintergrundbeleuchten eines Bildschirms der Benutzerschnittstelle bei einem Intensitätspegel unter Benutzung der Angabe eines Pegels der Umgebungslichtenergie; und
Auswählen einer initialen Kamerabelichtungseinstellung für eine Sensoranordnung (68) in der drahtlosen Vorrichtung unter Benutzung der Angabe des Pegels der Umgebungslichtenergie (122), wobei die Angabe des Pegels der Umgebungslichtenergie, die während das Wahrnehmen wahrgenommen wird, benutzt wird in beiden dem Auswählen des Intensitätspegels des Hintergrundbeleuchtens des Bildschirms und der initialen Kamerabelichtungseinstellung.

10. Das Verfahren nach Anspruch 9, wobei das Auswählen (120) ein automatisches Auswählen einer finalen Belichtung (142) umfasst, die einen Belichtungspegel eines aufzunehmenden Bildes durch die Kamerafunktionalität definiert.

11. Das Verfahren nach einem der Ansprüche 9-10, wobei das Auswählen ferner umfasst ein Auswählen eines finalen Belichtungspegels nachfolgend auf eine fortschreitende Anpassung (124, 128, 132, 136).

12. Das Verfahren nach einem der Ansprüche 9-11, wobei Auswählen der initialen Kamerabelichtung (122) während des Auswählens bestimmend ist für eine initiale Sensoranordnungsintegrationszeit.

## Revendications

1. Appareil (12) pour faciliter le fonctionnement d'un dispositif sans fil ayant la fonctionnalité de caméra, ledit appareil comprenant :
un ensemble de capteurs (68) ;
une interface utilisateur (42) comprenant un verre de couverture et un écran ;
un capteur de lumière ambiante à circuit de commande de rétroéclairage (46) configuré pour détecter l'énergie de lumière ambiante et pour fournir une indication d'un niveau de l'énergie de lumière ambiante ;
un élément de rétroéclairage d'écran (44) configuré pour rétroéclairer l'écran de l'interface utilisateur (42), ledit élément de rétroéclairage d'écran (44) étant adapté pour recevoir l'indication du niveau de l'énergie de lumière ambiante fournie par ledit capteur de lumière ambiante à circuit de commande de rétroéclairage (46), ledit élément de rétroéclairage d'écran (44) étant en outre configuré pour sélectionner un niveau d'intensité de l'élément de rétroéclairage d'écran (44) en utilisant l'indication du niveau de l'énergie de lumière ambiante ; et
un sélecteur d'exposition (84) adapté pour recevoir l'indication du niveau de l'énergie de lumière ambiante détectée par ledit capteur de lumière ambiante à circuit de commande de rétroéclairage (46), ledit sélecteur d'exposition (84) étant configuré pour sélectionner un réglage d'exposition de caméra initiale pour l'ensemble de capteurs (68) en utilisant l'indication du niveau de l'énergie de lumière ambiante, l'indication du niveau de l'énergie de lumière ambiante détectée par ledit capteur de lumière ambiante à circuit de commande de rétroéclairage (46) étant utilisée à la fois pour sélectionner le niveau d'intensité dudit élément de rétroéclairage d'écran et le réglage d'exposition initiale.

2. Appareil de la revendication 1, dans lequel ledit capteur de lumière ambiante (46) comprend un circuit à photodiode.

3. Appareil de l'une des revendications 1 à 2, dans lequel ledit sélecteur d'exposition (84) est configuré pour sélectionner automatiquement une exposition finale qui définit un niveau d'exposition d'une image à enregistrer par la fonctionnalité de caméra.

4. Appareil de la revendication 3, dans lequel ledit sélecteur d'exposition (84) est configuré pour sélectionner le niveau d'exposition finale conformément à un ajustement progressif.

5. Appareil de l'une des revendications 1 à 4, dans lequel la sélection de l'exposition de caméra initiale par ledit sélecteur d'exposition (84) détermine un temps d'intégration initial d'ensemble de capteurs.

6. Appareil de l'une des revendications 1 à 5, dans lequel la sélection de l'exposition de caméra initiale par ledit sélecteur d'exposition de caméra (84) détermine un gain d'ensemble de capteurs.

7. Appareil de l'une des revendications 1 à 6, dans lequel ledit sélecteur d'exposition (84) est configuré pour sélectionner une vitesse d'obturation.

8. Appareil de l'une des revendications 1 à 7, dans lequel ledit sélecteur d'exposition (84) est configuré pour sélectionner un réglage d'ouverture.

9. Procédé pour faciliter le fonctionnement d'un dispositif sans fil (12) ayant une fonctionnalité de caméra, ledit procédé comprenant le fait :
de détecter l'énergie de lumière ambiante (116) en utilisant un capteur de lumière ambiante à circuit de commande de rétroéclairage faisant partie d'une interface utilisateur pour un dispositif sans fil ;
de fournir une indication d'un niveau de l'énergie de lumière ambiante (158) ;
de rétroéclairer un écran de l'interface utilisateur à un niveau d'intensité en utilisant l'indication d'un niveau de l'énergie de lumière ambiante ; et
de sélectionner un réglage d'exposition de caméra initiale, pour un ensemble de capteurs (68) dans le dispositif sans fil, en utilisant l'indication du niveau de l'énergie de lumière ambiante (122), l'indication du niveau de l'énergie de lumière ambiante détectée pendant ladite détection étant utilisée à la fois dans la sélection du niveau d'intensité du rétroéclairage de l'écran et du réglage d'exposition de caméra initiale.

10. Procédé de la revendication 9, dans lequel ladite sélection (122) comprend le fait de sélectionner automatiquement une exposition finale (142) qui définit un niveau d'exposition d'une image à enregistrer par la fonctionnalité de caméra.

11. Procédé de l'une des revendications 9 et 10, dans lequel ladite sélection comprend en outre le fait de sélectionner un niveau d'exposition finale conformément à un ajustement progressif (124, 128, 132, 136).

12. Procédé de l'une des revendications 9 à 11, dans lequel la sélection de l'exposition de caméra initiale (122) lors de ladite sélection détermine un temps d'intégration d'ensemble de capteurs initial.
